# EUROPEAN PATENT SPECIFICATION

(11) **EP 2 192 731 B1**
(45) Date of publication and mention of the grant of the patent: **08.10.2014**
(21) Application number: 08305843.8
(22) Date of filing: 26.11.2008
(51) Int. Cl.: H04L 12/813, H04L 12/911

(54) **A method for performing data traffic control for a tree network**
Verfahren zur Durchführung von Datenverkehrsteuerung für ein Baumnetzwerk
Procédé pour la réalisation du contrôle de trafic de données pour un réseau arborescent

(43) Date of publication of application: 02.06.2010
(73) Proprietor: ALCATEL LUCENT, 92100 Boulogne-Billancourt (FR)
(72) Inventor: De Schepper, Koen, 2650 Edegem (BE); Vetter, Peter, 2000 Antwerpen (BE)
(74) Representative: ALU Antw Patent Attorneys

(56) References cited:
- AKBARI ET AL: "An optimal discrete rate allocation for overlay video multicasting" COMPUTER COMMUNICATIONS, ELSEVIER SCIENCE PUBLISHERS BV, AMSTERDAM, NL, vol. 31, no. 3, 31 January 2008 (2008-01-31), pages 551-562, XP022442386 ISSN: 0140-3664
- MIN SIK KIM ET AL: "Optimal distribution tree for internet streaming media" PROCEEDINGS OF THE 23RD. INTERNATIONAL CONFERENCE ON DISTRIBUTED COMPUTING SYSTEMS. ICDCS 2003. PROVIDENCE, RI, MAY 19 - 22, 2003; [INTERNATIONAL CONFERENCE ON DISTRIBUTED COMPUTING SYSTEMS], LOS ALAMITOS, CA : IEEE COMP. SOC, US, vol. CONF. 23, 19 May 2003 (2003-05-19), pages 116-125, XP010642279 ISBN: 978-0-7695-1920-3
- PAZOS C M ET AL: "Using back-pressure to improve TCP performance with many flows", INFOCOM '99. EIGHTEENTH ANNUAL JOINT CONFERENCE OF THE IEEE COMPUTER A ND COMMUNICATIONS SOCIETIES. PROCEEDINGS. IEEE NEW YORK, NY, USA 21-25 MARCH 1999, PISCATAWAY, NJ, USA,IEEE, US, vol. 2, 21 March 1999 (1999-03-21), pages 431-438, XP010323836, ISBN: 978-0-7803-5417-3

## Description

### Technical field of the invention

The present invention relates to the field of methods for performing data traffic control for a tree network, said tree network comprising nodes arranged and connected to each other according to a tree topology, comprising a root node and at least two leaf nodes (or leaves), said root being connected to each of said leaf nodes.

### Background of the invention

Current PCN approaches, as discussed in IETF, are designed for a general mesh topology with multiple N-to-N Ingress-Egress Aggregates (IEA). The designers of the prior art opted for a simple metering and marking algorithm in the interior nodes, which avoids the complexity to distinguish between all the IEA's that pass through every interior node and to signal their congestion status to the edges. The edges contain functionality to deduce the congestion status per IEA. A summary of PCN is described in "PCN-based Admission Control and Flow Termination", M. Menth, et al., PCN-Based Admission Control and Flow Termination, http://www3.informatik.uni-wuerzburg.de/staff/menth/Publications/Menth08-PCN-Comparison.pdf

The current PCN approach is though not optimized and may even be difficult to operate in a tree network. This is for instance due to the fact that the specificities of a tree network have not been considered in the current PCN approach.

A meshed network is typically N-to-N where a flow entering a border node (as an ingress, ingress node) has the same probability of leaving the domain on any other border node (as an egress, egress node).

Moreover, in a meshed network, the ingress and the egress are both similar devices. The direction of a flow in an interior node can be in any N equal directions, and is of no importance to the functionality of the node itself and the border nodes.

The current PCN approach assumes that the ingress nodes and egress nodes are able to distinguish between different IEA's. This requires additional functionality such as tunnels or retrieval of topology information per flow from the control or management plane.

In a meshed network the number of border nodes is typically equal or less compared to the number of interior nodes.

The fact that, according to the state of the art PCN approach, an interior node in a meshed PCN architecture marks all packets in-band, results in a restriction of the number of available congestion states if a too complex signaling architecture needs to be avoided (IETF currently considers two or three states).

Therefore there exists a need for performing data traffic control for a tree network which is more adapted to the tree network than the current PCN approaches designed for meshed networks, and which can therefore simplify and solve problems of a straight forward application of the current PCN approach used for meshed networks in tree networks.

"An optimal discrete rate allocation for overly video multicasting" by Akbari et al. discloses the problem of bandwidth allocation in tree networks, but it fails to provide a way to perform data traffic control.

### Summary of the invention

When terms as "first", "second", "third" and the like are used, this does not necessarily mean that a sequential or that a chronological order is to be assumed.

The term "comprising", should be interpreted as such that it does not exclude other elements or steps.

The state of the art, on which the preamble of claim 1 is based, discloses a method for performing data traffic control of a network, wherein the network can be a tree network.

As the state of the art method has not been designed for use with tree networks, the state of the art methods are not optimal and give rise to different problems and a non optimized and relatively inefficient management process.

It is an object of the present invention to provide a method performing data traffic control of a network, wherein the network is a tree network, which solves at least one of the above problems and which is relatively simple compared to a straight forward implementation of current PCN approaches which have been developed for mesh based networks.

This is achieved by the characterizing features of claim 1.

For the purpose of the present description the following terminology has been used:
- root node: the node of the tree network which is directly or indirectly connected with all leaf nodes of the tree.
- leaf nodes: the nodes arranged at the opposite side of the root node of the tree network, these nodes (logically speaking) only comprise a single link to the tree and do not have dependent nodes.
- a non-leaf node: a node corresponding to a node which is not a leaf node; for instance a root node or an intermediate node.
- node generation: set of all nodes in a tree network which are at a predetermined level of tree network, corresponding to for instance the same number of bifurcations necessary to arrive from the root to the node. These nodes are typically not directly interconnected to each other but are typically of the same type (e.g.: they perform a similar functionality). It should be noted that tree networks can comprise branches which comprise a different number of sublevels. For instance, it can be that not all leaf nodes are of the same generation.
- In a tree network, a node A can be considered to be dependent of a node B if all upstream traffic from node A passes through B and if all downstream traffic towards node A passes through node B.
- (direct) parent node of a node "A": node of which node A is (directly) dependent towards the root of the tree.
- (direct) child node of a node "A": node which is (directly) dependent (or (directly) subtending) of a node A in the direction of the leaf nodes.
- upstream: the direction defined as going from the leaves towards the root of the tree.
- downstream: the direction defined as going from the root towards the leaves of the tree.

According to a first aspect of the present invention a method is disclosed for performing data traffic control for a tree network, the tree network comprising nodes arranged and connected to each other according to a tree topology, comprising a root node and at least two leaf nodes, the root node being connected to each of the leaf nodes, wherein the method comprises:
- measuring the available bandwidth at (e.g. a link of(e.g. an incoming or outgoing link)) at least one non-leaf node;
- based on (at least) this measurement, allocating an allowable bandwidth information for each of the direct child nodes of said non-leaf node;
- distributing allowable bandwidth information over nodes which are positioned downstream from said non-leaf node.

The at least one node can be at least one non-leaf node. The distribution of allowable bandwidth information can advantageously comprise sending messages that contain the allowable bandwidth, for instance to nodes which are positioned downstream from said node.

When considering the method at a location of a non-root node, the method can further comprise:
- receiving allowable bandwidth information from at least one parent node of the non-leaf node;
- to base the allocation of an allowable bandwidth information for each of the direct child nodes of the non-leaf node on the allowable bandwidth information from at least one parent node.

Allowable bandwidth information may comprise information relating to the allowable bandwidth. It may be, but not only, bandwidth measurement information, multiple bandwidth measurement information (for instance an aggregate of available bandwidth measurements for for instance a number of links between dependent nodes), synthesized bandwidth information (can for instance be the result of the application of a set of rules on for instance bandwidth measurement values; this set of rules may further take into account feedback information relating to bandwidth usage in dependent nodes), free bandwidth measurement values, current bandwidth usage values, decisions (e.g. admission and/or termination admissions). It may also comprise impacted flow identification information (for instance a predetermined tag, or for instance an IP address associated with the flow), comprising information which can identify a traffic flow, e.g. a traffic flow which is/would be affected by congestion. It may comprise (other types of) traffic information.

Allowable bandwidth may for instance comprise total available bandwidth (i.e. the total bandwidth minus the measured used bandwidth), the total available bandwidth minus an appropriate safety margin, or a share of the available bandwidth partitioned across the different links to the child nodes.

The data traffic control or management can for instance comprise congestion control, resource access control (RAC), flow termination management.

According to embodiments of the present invention, the network can further comprise at least one or at least two intermediate node(s) which is (are) arranged in between the root node and the leaf nodes.

The network can comprise a plurality of leaf nodes.

The network can comprise a plurality of intermediate nodes. The tree network may comprise, next to the root node and the leaf nodes an integer number of node generations or tree levels, each node generation comprising at least one node, or at least two nodes. The network can comprise for instance three node generation or tree levels. The node generation can for instance correspond to access nodes (AN) (which can for instance be connected to one or more subscriber lines (e.g. ADSL, fiber, wireless), Broadband service aggregator nodes (BSA) (e.g. Ethernet node, router or switch) and Edge nodes (EN) as for instance an edge router (for instance a Broadband service router (BSR)). It is to be noted that AN, BSA and BSR are not necessarily required to be located at the same tree levels according to embodiments of the present invention.

The root node can be connected to an external network as for instance a core network in the upstream direction.

The leaf nodes can preferably comprise a decision means or decision point (DP). The decision point can make a decision based on for instance or at least allowable bandwidth information which has been received (and/or can be for instance based on the non-receipt of allowable bandwidth information there where it would have been expected).

The decision can comprise for instance:
- Decision to accept a flow;
- Decision to reject a flow;
- Decision to terminate a flow;
- Decision to reduce bandwidth usage;
- Decision to perform a different marking of the flow (for instance marking a different Quality of service (QoS) class).
Other types of decision are also possible.
Different leaf nodes can be controlled by a single decision means (or decision point). In another view a single decision means can make decisions for different, or a plurality of, leaf nodes.

The leaf nodes can preferably comprise a policy enforcement means (UPPE) for policing upstream traffic.

The root node can preferably comprise a policy enforcement means (DownPE) for policing downstream traffic.
A policy enforcement means may comprise the function of ensuring that the network (or network node) behaves compliant to a decision taken, for instance by means of a decision means.

According to embodiments of the present invention, at least one node in the tree network may comprise a policy enforcement means (of the UPPE and/or DownPE type). This can also be at least one intermediate node.

According to embodiments of the present invention, the policy enforcement means may be distributed over different nodes of the tree network. It may also be located external to the tree network.

According to preferred embodiments of the present invention, the allowable bandwidth information (both about the upstream direction and/or downstream direction) is distributed over the direct child nodes of the non-leaf node. The allowable bandwidth information may be distributed to the leaf nodes which are dependent on the non-leaf node. It may be distributed to intermediate nodes (for instance to all intermediate nodes) which are dependent of the non-leaf node. It may be distributed to intermediate nodes (for instance to all intermediate nodes) which are dependent of the non-leaf node and arranged at one or more predetermined tree levels (node generations) of the tree network.

According to preferred embodiments, the allocation of allowable bandwidth information and/or allowable bandwidth for each of the child nodes is based on a set of rules. This set of rules can be predetermined.

The allocation (or designation) of allowable bandwidth can be based on local measurements, which can be measurements which have been measured locally at a specific node.

According to preferred embodiments, wherein the node comprises a non-leaf node, the method further comprises forwarding feedback information from at least one (or a plurality or all) child node (for instance from at least one direct child node, or from a plurality of or from all direct child nodes) of the non-leaf node to the non-leaf node, and taking this information into account in the allocation of allowable bandwidth. The allocation may for instance be based on feedback information comprising for instance the average bandwidth usage or average available bandwidth for all of the child nodes for a respective parent node. It may for instance be based on the peak (or maximum) bandwidth usage of all of the child nodes for a respective parent node.

According to preferred embodiments the allocation of the allowable bandwidth for each direct child node can be based on the number of downstream links towards direct child nodes attached to the non-leaf node.

According to advantageous embodiments, measuring the available bandwidth can comprise measuring the available bandwidth upstream (for instance on the upstream link) of the node (or upstream of the non-leaf node).

According to advantageous embodiments, measuring the available bandwidth comprises measuring the available bandwidth downstream of the non-leaf node (for instance on the downstream link towards the direct child node).

The measuring of the available bandwidth at a node can occur on outgoing and/or incoming links of the node.

It is to be noted that embodiments of the present invention can, at the same time, be applied for the same tree network, in parallel. This may for instance be the case when embodiments of the present invention are applied completely or to a large extent independently for different QoS classes.

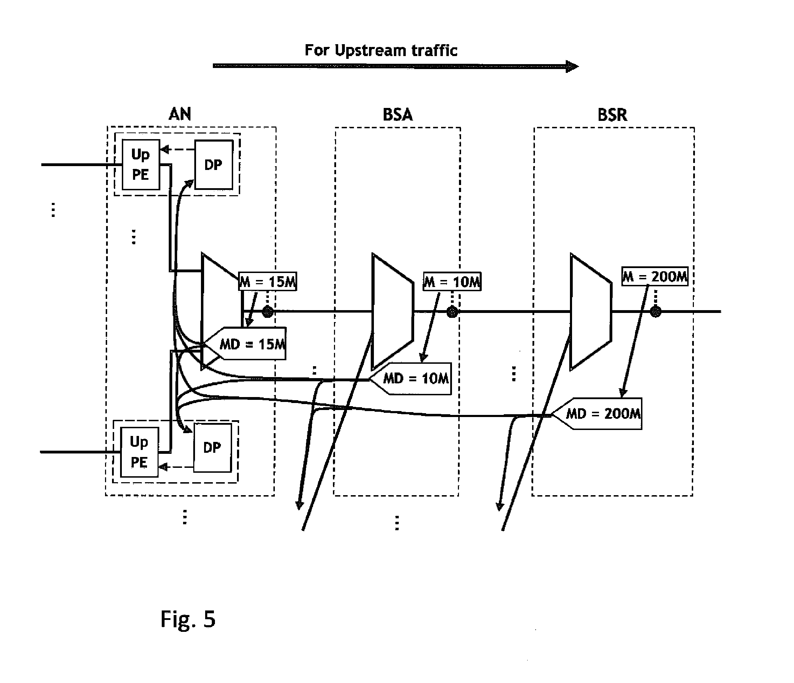

According to a second aspect of the present invention, a method for performing data traffic control for a tree network is disclosed, the tree network comprising nodes arranged and connected to each other according to a tree topology, comprising a root node and at least two leaf nodes, the root node being connected to each of the leaf nodes by means of at least one intermediate node, **characterized in that** the method comprises iterating the method according any of the embodiments according to the first aspect of the present invention stepwise from the root node down to the leaf nodes, in order to provide the leaf nodes with an overview of the allowable bandwidth between the leaf-node and the root node in upstream and downstream direction.
As an alternative to the stepwise iteration, at least one (or a plurality or each) non-leaf node can distribute (for instance it can send a message with) allowable bandwidth information (e.g. its allowable bandwidth) to its dependent (or subtending) leaf-nodes. The decision point can comprise a means for deducing the leaf-node to root-node available bandwidth in upstream and/or downstream direction from the received messages. The decision algorithm or rules can comprise for instance taking the minimum of the allowable bandwidths reported by or received from the different non-leaf nodes on the leaf-node to root-node path. This is for instance illustrated in Fig. 5.

According to embodiments of the present invention, a method is disclosed for performing data traffic control for a tree network, the tree network comprising nodes arranged and connected to each other according to a tree topology, comprising a root node and at least two leaf nodes, the root node being connected to each of the leaf nodes by means of at least one intermediate node, wherein each node broadcasts available bandwidth information towards their dependent leaves and the decision points in these leaves decide on the bandwidth usage based on the received available bandwidth information. The root and all of the intermediate nodes may for instance forward the available bandwidth measurement performed in the respective nodes in the downstream direction towards the leaves. The one or more decision point(s) in the leaves can for instance take the minimum available bandwidth value which it has received from all of its parent nodes (inclusive the root node).
According to a third aspect of the present invention a network node adapted for use as a non-leaf node in a tree network is disclosed, comprising
- a means for measuring available bandwidth;
- a means for allocating bandwidth to the child nodes of the non-leaf node;
- a means for distributing the allocated bandwidth information to nodes which are positioned downstream from the non-leaf node.

According to preferred embodiments the means for allocating bandwidth is adapted to allocate bandwidth based on a set of rules, and on the number of downstream links for the non-leaf node.

According to preferred embodiments, the node can further comprise a means for receiving feedback information of at least one (or of a plurality or of all) of its child nodes (or from at least one of, or from a plurality or from all of its direct child nodes), which can be taken into account by the means for allocating bandwidth.

According to a fourth aspect of the present invention, a network node is disclosed which is adapted for being used as a leaf node in a tree network, the network node comprising:
- a means for receiving bandwidth allocation information from at least one of its parent node(s) (for instance of his direct parent node);
- a decision means adapted for controlling the bandwidth usage of the network node, based on the received bandwidth allocation information.

According to a fifth aspect of the present invention, a method for performing data traffic control for a tree network, the tree network comprising nodes arranged and connected to each other according to a tree topology, comprising a root node and at least two leaf nodes, the root node being connected to each of the leaf nodes, wherein the method comprises:
- receiving allowable bandwidth information or feedback information from at least one (or a multitude of, or of all) dependent leaf node(s) of a parent node of said leaf node;
- taking this information into account for performing traffic control (e.g. congestion control) in said tree network (for instance in said parent node).
The method may further comprise taking a decision (for instance in a decision point), examples of which have been described in the description of the first aspect of the present invention.
The decision taking can be based on a set of rules.
Further embodiments of the fifth aspect have been described below. Methods according to the fifth aspect of the present invention can be combined with methods and nodes according to other aspects of the present invention, but can also be applied independently.

Further aspects of the present invention are described by the dependent claims. The features from the dependent claims, features of any of the independent claims and any features of other dependent claims may be combined as considered appropriate to the person of ordinary skill, and not only in the particular combinations as defined by the claims. Features and embodiments for the different aspects of the present invention, corresponding to features and embodiments of other aspects of the present invention, are similarly considered to be within the scope of the present invention, as will be recognized by the skilled person.

### Brief description of the drawings

The accompanying drawings are used to illustrate embodiments of the present invention.

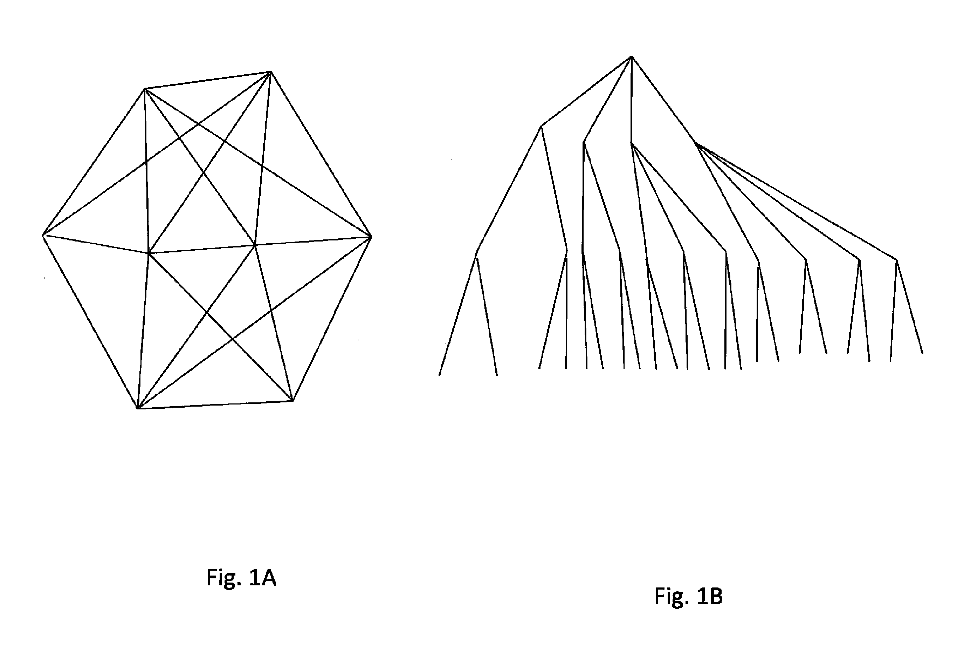

Fig. 1A and 1B illustrate the notion of a meshed (Fig. 1A) and a tree (Fig. 1B) network.
Fig. 2 illustrates (part of) a tree network according to embodiments of the present invention, in which 3 different levels (generations) of nodes have been chosen. The different generations of nodes have been embodied, merely as an example, by the different levels of a typical tree network comprising access nodes (AN) (which can for instance be connected to one or more subscriber lines), Broadband service aggregator nodes (BSA) (e.g Ethernet node, router or switch) and Edge nodes (EN) as for instance an edge router (for instance a Broadband service router (BSR)).
Fig. 3 illustrates a scenario according to embodiments of the present invention for managing data traffic in the downstream direction.
Fig. 4 and Fig. 5 illustrate scenarios according to embodiments of the present invention for managing data traffic in the upstream direction.
Fig. 6 illustrates embodiments of the present invention which comprise forwarding feedback information from at least one child node of a non-leaf node, and taking this information into account in the allocation of allowable bandwidth.

Reference signs are chosen such that they are the same forsimilar or equal elements or features in different figures or drawings.

### Description of illustrative embodiments

The above and other advantageous features and objects of the invention will become more apparent and the invention will be better understood from the following detailed description when read in conjunction with the respective drawings.

The description of aspects of the present invention is performed by means of particular embodiments and with reference to certain drawings but the invention is not limited thereto. Depicted figures are only schematic and should not be considered as limiting.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

While some embodiments described herein include some but not other features included in other embodiments, combinations of features of different embodiments are meant to be within the scope of the invention, and form different embodiments, as would be understood by the skilled person.

In a tree network, the root node can be the ingress or egress respectively for downstream or upstream traffic. All the leaf nodes can act as the egress or ingress respectively for downstream or upstream traffic. If, according to the prior art, all border nodes would need to do the same functionality, then the leaf nodes would handle very few flows going to or coming from only 1 other border node, and the root node would need to handle a large number of flows, from a large number of leaf nodes. It can easily be understood that it is not scalable to let the root node perform the same functionality as the leaf nodes. This also impacts the control protocols used between border nodes. If e.g. congestion occurs near the root in the upstream direction (towards the root), the root node (then egress node) would deduce from the marked packets that there is a congested path along all the IEA and will inform all N ingress nodes (on the leaves) by sending a large number of messages. By taking into account the specificities of a tree network, this can be done more efficiently. Similarly, in the downstream direction, a congestion near the root node (then an ingress node) would result in a message storm by all N leaves (then egress nodes) that inform the root node about the same congestion. It would be simpler if leaf nodes (or leaves) do not have to communicate the congestion to the root node by concentrating decisions in the leaf nodes, or that the intermediate node that detects the common congestion path directly informs the root node.

In a tree network there are only two directions of traffic (upstream and downstream), and the border devices ending the flows are not equal. The directions are either towards the root (aggregation, typically upstream) or towards the leaves (distribution, typically downstream). One can make use of this characteristic of a tree network, which is not possible in a meshed network, where identical border nodes are assumed.

In a tree network, a natural or intrinsic separation of IEA per leaf exists, so that it is easier to gather congestion information in a leaf node both for the downstream and upstream direction, rather than applying the conventional PCN egress functionality in the root node.

A tree network typically has about N times more border nodes than it has interior (or internal) nodes, with N the number of child nodes per parent node. In a general mesh network of the prior art PCN approach, the interior nodes are equipped with a simple marking algorithm to avoid the complexity of identifying multiple IEA and reporting to multiple edges. Exploiting the specificity of the tree-topology in embodiments of the present invention, the functionality of the non-leaf nodes comprises more sophisticated means to measure, allocate and report the allowable bandwidth. This additional functionality is however not cost-prohibitive as the number of interior nodes is limited and easy to realize. A tree network architecture would also allow signaling the available bandwidth information in for instance separate messages more accurately.

In a certain view embodiments of the present invention exploit the specific topology of a tree network to implement more efficient measurement based control mechanisms for Admission/Termination/ Congestion control. The pre-congestion notification mechanism, which can control resource admission and termination, is one specific embodiment used as an example to describe optimizations that this architecture brings, but other control mechanisms can make use of this.

Some embodiments can comprise the following:- the Decision Points (DP) (in which congestion information for an IEA is gathered and e.g. Resource Admission Control (RAC) can be performed) are located in the leaf nodes. - measurement messages towards the leaves are handled (said to be "distributed" or "broadcasted") for instance as follows:- in certain embodiments, a message that is send towards a child is captured by the child, and the information combined with local measurements and send further towards the leaves, or a message is directly broadcasted to all the leaves (where the DP's can be located) dependent of that link. - according to certain embodiments, a common message can be sent to all children or to all direct children. In other embodiments a dedicated message can be calculated and sent/broadcasted/distributed to a specific link. - the interior nodes can aggregate or synthesize feedback measurement messages upstream, for instance towards the root (i.e. capture the messages and reduce them to a single message sent in the direction of the root node). This feedback can be used as input for allocation rules and/or distribution algorithms of measurements towards the leaf nodes, for fair and targeted termination based on peak and average link usage of child nodes, or for intelligent and fair congestion control.

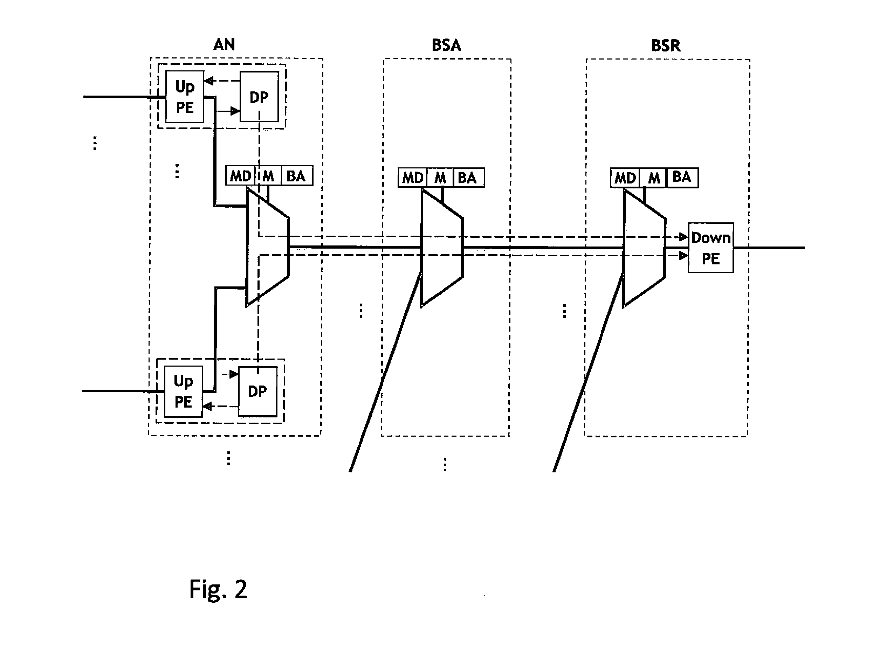

An embodiment of the present invention is described for an access aggregation network (in Fig. 2), in which the BSR (Broadband Service Router) is the root node and the RG (Residential Gateway) or AN (Access Node) contains the leaf node(s). The RG (not shown) corresponds to the device at the customer premises. The principle can however be applied to a more general architecture. The BSA's (Broadband Service Aggregators) are here the interior nodes. Each node can comprise a measurement agent M, a message distributor or broadcaster MD and a message synthesizer or bandwidth allocator (BA). The architecture can also comprise a DP (Decision Point) per subscriber line in the AN and a PE (Policy Enforcement) function respectively in the AN for Upstream traffic and in the BSR for Downstream traffic. The last section per leaf can be considered the first mile. At a logical level, the leaf node is the RG (Residential Gateway). It is however also possible to virtually place the DP for the RG in the AN (as shown in Fig. 2). Note that it is also possible in a more general embodiment that the leaf nodes are aggregation nodes themselves (e.g. the AN is one leaf node and contains one DP, or the RG contains multiple subscribers of a multi-family unit connected to it).

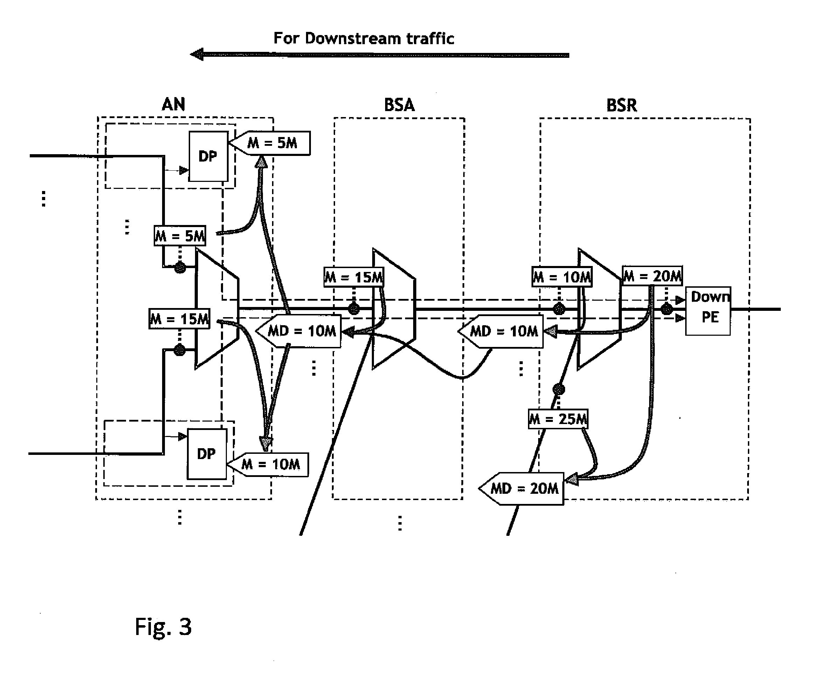

An embodiment of the present invention according to the downstream scenario is depicted in fig. 3. At the BSR, the measurement means or function M determines the available bandwidth (i.e. not-used bandwidth) at the downstream link and agent MD sends this available bandwidth information down the link to the next level MD in the BSA. In the next node (the BSA), M measures the available Bandwidth (BW) on each outgoing (downstream) link. The BA in the BSR determines for each next link, for instance the minimum between the available BW on the preceding link and available BW on the next link (the actual determination can be defined by a set of Rules), so that the MD of the BSA can convey this minimum value to the following node (in this case the AN). Through such cascade in a tree, and an iteration of the method in every subsequent node from root to leaf, the (DP in the) leaf node gets the available Bandwidth information in downstream direction and can use this for admission control decisions or for other adaptive traffic mechanisms (e.g. reducing the video rate for congestion control).

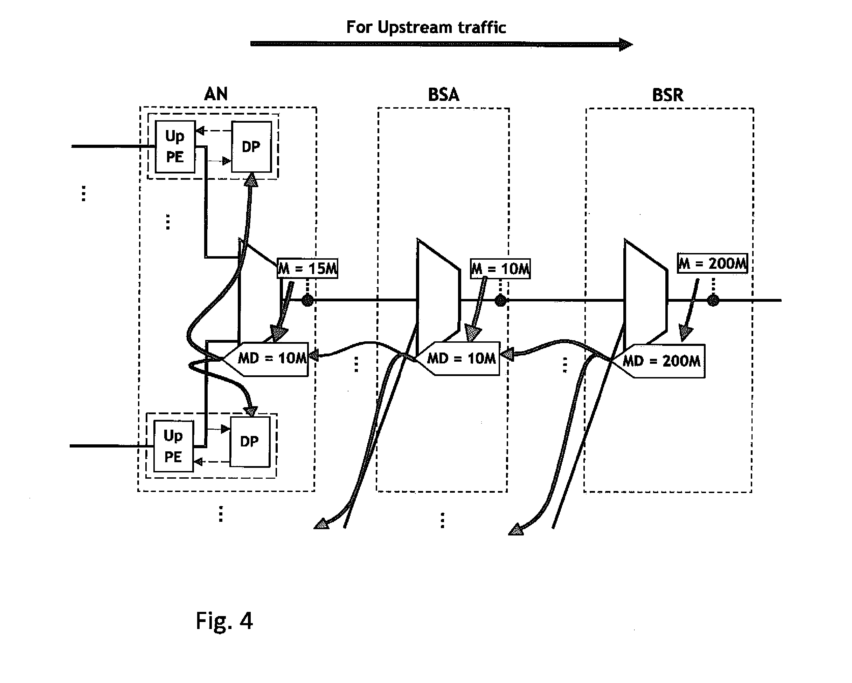

The available bandwidth measurement as described above can be used for both the upstream and downstream flows, but typically it is preferred to measure the available BW before the bottleneck. This way an exact degree of overload can be measured, whereas after the bottleneck, this overload would be lost (dropped). To support this, embodiments according the upstream traffic management can operate in a different, but very similar fashion (see e.g. Fig. 4). The BSR can measure the congestion on the link towards the core network and distributes or broadcasts the available BW to the subtending or dependent nodes (the BSA's). The BSA measures the congestion on the link towards the BSR, compares the available BW with the value received from the BSR, and broadcasts e.g. the minimum of the available BW to the subtending or dependent nodes (the AN) (this may be another value or available bandwidth information as determined by a set of rules). The AN measures the congestion towards the BSA, compares the non-used BW with the value received from the BSA, and distributes e.g. the minimum to the subtending nodes (in this case the subtending subscriber ports).

A measurement of the BW on the first mile may be less preferred, because the number of flows may be too small and flow rate variations may be too large to provide a representative BW usage. A conventional RAC with summation of signaled or estimated peak rates can be used instead to deduce the available BW on the first mile. The obtained value can however be useable/used in the overall mechanism to determine the available BW on the aggregate between leaf node and root.

Update messages can be regularly sent (e.g. every 100 ms, which would create negligibly small BW overhead of a few 10 kbit/s).
In alternative embodiments (Fig. 5), the intermediate nodes are not capturing or interpreting the measurements from its parent nodes, and each node broadcasts the available bandwidth towards their leaves and the decision points in the leaves can take the minimum of all received messages.

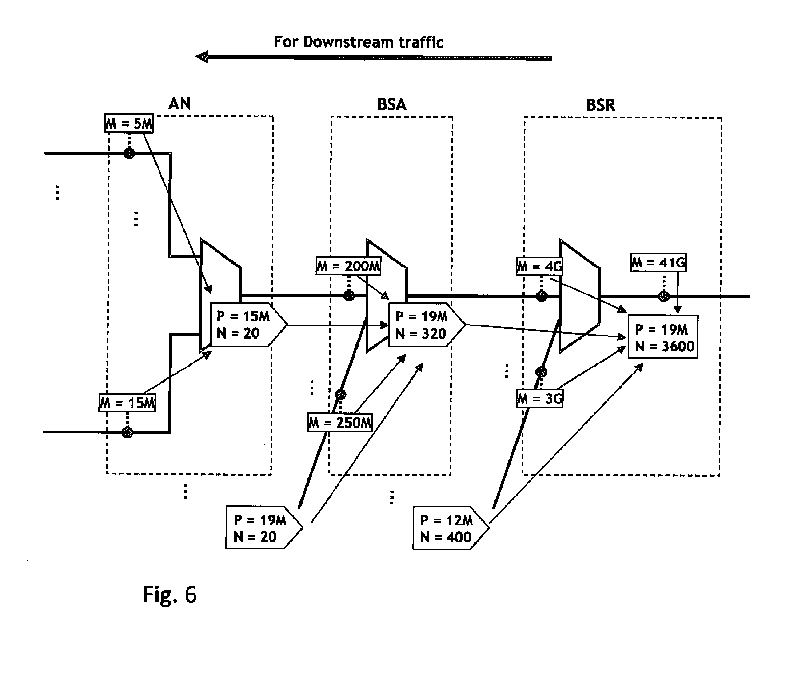

Fig. 6 shows an example of feedback concentration where each node can be informed about information of multiple endpoints or leaves, but without the risk of being overwhelmed by messages. Each node can for instance be informed with the peak or maximum used bandwidth (P) of a subscriber and the total number of subscribers connected to it (N). Together with the local measurements of used bandwidths, this information can be extra input for Allocation bandwidth.

This info could in this case be used to determine a termination level, by which nodes must reduce their bandwidth usage.

In certain embodiments, if an available bandwidth information message is lost, the value received in the previous message can be used.

The result of the signaling described above is that every leaf node (or decision point DP) can know the total available bandwidth in up- and/or downstream direction. The DP's can steer the policy enforcement (PE) functions located locally for upstream, and in the root for downstream flows.

As often there is no co-ordination between the DP (except for instance for DP's within the same AN), it may be possible that several flows are started at the same time, which could result in congestion. The allowable BW per node should hence be dimensioned with a reasonable margin (as also done with the thresholds used in PCN), which can be advantageously chosen larger for nodes which are closer to the root. An intelligent determination of the available bandwidth information to be distributed/sent/forwarded can be performed by means of a set of rules.

In another embodiment, the set of rules may partition the available BW on a trunk to its subtending branches to prevent that too many flows are simultaneously started. The sharing can be made e.g. proportional to the available BW on the respective subtending branches. The sum of the communicated available BW per branch can be equal to the total available BW on the trunk, or, preferably, multiplied by an oversubscription factor to account for the fact that not every branch may contain new flows that consume the available BW.

While the principles of the invention have been set out above in connection with specific embodiments, it is to be clearly understood that this description is merely made by way of example and not as a limitation of the scope of protection which is determined by the appended claims.

## Claims

1. A method for performing data traffic control for a tree network, said tree network comprising nodes arranged and connected to each other according to a tree topology, comprising a root node and at least two leaf nodes, said root node being connected to each of said leaf nodes, and said tree network comprising at least one intermediate node which is arranged in between said root node and said leaf nodes, each of the at least two leaf nodes comprising a decision module, wherein said method comprises:
- locally measuring the available bandwidth at at least one intermediate node or root node;
- based on at least this measurement, allocating an allowable bandwidth information for each of the direct child nodes of said intermediate node or root node;
- distributing allowable bandwidth information over nodes which are positioned downstream from said intermediate node or root node in order to provide the leaf nodes with an overview of allowable bandwidth between the leaf node and the root node in upstream and downstream direction
- deciding in the decision module of the leaf node on the bandwidth usage, based on the received bandwidth information.

2. A method according to claim 1, wherein the leaf nodes and/or root node comprise policy enforcement means, and the method comprising the further step of enforcing at the enforcement means the decision which is taken at the decision module.

3. A method according to any of the previous claims, wherein said allowable bandwidth information is distributed over said direct child nodes of said intermediate node or root node.

4. A method according to any of the previous claims, wherein said allowable bandwidth information is distributed over all leaf nodes of said intermediate node or root node.

5. A method according to claim 3 to 4, further comprising forwarding feedback information from at least one child node of said intermediate node or root node, and taking this information into account in said allocation of allowable bandwidth.

6. A method according to claim 3 to 5, wherein said allocation of said allowable bandwidth for each direct child node is based on the number of downstream links towards direct child nodes attached to said intermediate node or root node.

7. A method according to any of the previous claims, wherein said measuring the available bandwidth comprises measuring the available bandwidth downstream of said intermediate node or root node.

8. A method according to any of the previous claims, wherein said measuring the available bandwidth comprises measuring the available bandwidth upstream of said intermediate node or root node.

9. A method according to any of the previous claims, further comprising:
- receiving allowable bandwidth information from at least one parent node of said intermediate node or root node;
- to base the allocation of an allowable bandwidth information for each of the direct child nodes of said intermediate node or root node on said allowable bandwidth information from at least one parent node.

10. A method according to any of the previous claims, wherein said method further comprises iterating the method steps of claim 1 stepwise from said root node down to said leaf nodes, in order to provide said leaf nodes with an overview of the available bandwidth between said leaf-node and said root node in upstream and downstream direction.

## Patentansprüche

1. Verfahren zur Durchführung von Datenverkehrssteuerung für ein Baumnetzwerk, wobei das besagte Baumnetzwerk Knoten umfasst, welche gemäß einer Baumtopologie angeordnet und miteinander verbunden sind, umfassend einen Wurzelknoten und mindestens zwei Blattknoten, wobei der besagte Wurzelknoten mit einem jeden der besagten Blattknoten verbunden ist, und wobei das besagte Baumnetzwerk mindestens einen Zwischenknoten umfasst, welcher zwischen dem besagten Wurzelknoten und den besagten Blattknoten angeordnet ist, wobei ein jeder der besagten mindestens zwei Blattknoten ein Entscheidungsmodul umfasst, wobei das besagte Verfahren umfasst:
- Lokales Messen der verfügbaren Bandbreite an mindestens einem Zwischenknoten oder an dem Wurzelknoten;
- basierend zumindest auf dieser Messung, Zuweisen einer zulässigen Bandbreiteninformation für einen jeden der direkten Kindknoten des besagten Zwischenknotens oder des besagten Wurzelknotens;
- Verteilen der zulässigen Bandbreiteninformation über Knoten, welche stromabwärts des besagten Zwischenknotens oder des besagten Wurzelknotens positioniert sind, um den Blattknoten eine Übersicht der zulässigen Bandbreite zwischen dem Blattknoten und dem Wurzelknoten in Stromaufwärts- und Stromabwärtsrichtung bereitzustellen;
- Entscheiden, in dem Entscheidungsmodul des Blattknotens, über die Bandbreitennutzung auf der Basis der empfangenen Bandbreiteninformation.

2. Verfahren nach Anspruch 1, wobei die Blattknoten und/oder der Wurzelknoten ein Richtliniendurchsetzungsmittel umfassen, und wobei das Verfahren den weiteren Schritt des Durchsetzens, an dem Durchsetzungsmittel, der an dem Entscheidungsmodul getroffenen Entscheidung umfasst.

3. Verfahren nach einem beliebigen der vorstehenden Ansprüche, wobei die besagte zulässige Bandbreiteninformation über die besagten direkten Kindknoten des besagten Zwischenknotens oder des besagten Wurzelknotens verteilt wird.

4. Verfahren nach einem beliebigen der vorstehenden Ansprüche, wobei die besagte zulässige Bandbreiteninformation über alle Blattknoten des besagten Zwischenknotens oder des besagten Wurzelknotens verteilt wird.

5. Verfahren nach den Ansprüchen 3 bis 4, weiterhin umfassend das Weiterleiten von Rückkopplungsinformationen von mindestens einem Kindknoten des besagten Zwischenknotens oder des besagten Wurzelknotens sowie das Berücksichtigen dieser Informationen bei der besagten Zuweisung der zulässigen Bandbreite.

6. Verfahren nach den Ansprüchen 3 bis 5, wobei die besagte Zuweisung der besagten zulässigen Bandbreite für jeden direkten Kindknoten auf der Anzahl von Downstream-Verbindungsstrecken zu den an den besagten Zwischenknoten oder den besagten Wurzelknoten angebundenen direkten Kindknoten basiert.

7. Verfahren nach einem beliebigen der vorstehenden Ansprüche, wobei das besagte Messen der verfügbaren Bandbreite das Messen der verfügbaren Bandbreite stromabwärts des besagten Zwischenknotens oder des besagten Wurzelknotens umfasst.

8. Verfahren nach einem beliebigen der vorstehenden Ansprüche, wobei das besagte Messen der verfügbaren Bandbreite das Messen der verfügbaren Bandbreite stromaufwärts des besagten Zwischenknotens oder des besagten Wurzelknotens umfasst.

9. Verfahren nach einem beliebigen der vorstehenden Ansprüche, weiterhin umfassend:
- Empfangen einer zulässigen Bandbreiteninformation von mindestens einem Elternknoten des besagten Zwischenknotens oder des besagten Wurzelknotens;
- Basieren der Zuweisung einer zulässigen Bandbreiteninformation für einen jeden der direkten Kindknoten des besagten Zwischenknotens oder des besagten Wurzelknotens auf der besagten zulässigen Bandbreiteninformation von mindestens einem Elternknoten.

10. Verfahren nach einem beliebigen der vorstehenden Ansprüche, wobei das besagte Verfahren weiterhin das Wiederholen der Verfahrensschritte gemäß Anspruch 1 schrittweise von dem besagten Wurzelknoten stromabwärts bis zu den besagten Blattknoten umfasst, um den besagten Blattknoten eine Übersicht der verfügbaren Bandbreite zwischen dem besagten Blattknoten und dem besagten Wurzelknoten in Stromaufwärts- und Stromabwärtsrichtung bereitzustellen.

## Revendications

1. Procédé d'exécution d'un contrôle du trafic de données pour un réseau arborescent, ledit réseau arborescent comprenant des noeuds disposés et connectés les uns avec les autres conformément à une topologie arborescente, comprenant un noeud racine et au moins deux noeuds feuilles, ledit noeud racine étant connecté à chacun desdits noeuds feuilles, et ledit réseau arborescent comprenant au moins un noeud intermédiaire qui est disposé entre ledit noeud racine et lesdits noeuds feuilles, chacun des au moins deux noeuds feuilles comprenant un module de décision, dans lequel ledit procédé comprend les étapes suivantes :
- mesurer localement la bande passante disponible à au moins un noeud intermédiaire ou un noeud racine ;
- sur la base d'au moins cette mesure, attribuer des informations de bande passante admissible pour chacun des noeuds enfants directs dudit noeud intermédiaire ou dudit noeud racine ;
- distribuer des informations de bande passante admissible sur les noeuds qui sont positionnés en aval dudit noeud intermédiaire ou dudit noeud racine afin de fournir aux noeuds feuilles une vue globale de la bande passante admissible entre le noeud feuille et le noeud racine en sens amont et aval
- déterminer, dans le module de décision du noeud feuille, l'utilisation de la bande passante, en fonction des informations de bande passante reçues.

2. Procédé selon la revendication 1, dans lequel les noeuds feuilles et/ou le noeud racine comprennent des moyens d'application de politiques, et le procédé comprend l'étape supplémentaire d'application, au niveau des moyens d'application, de la décision qui est prise au niveau du module de décision.

3. Procédé selon l'une quelconque des revendications précédentes, dans lequel lesdites informations de bande passante admissible sont distribuées sur lesdits noeuds enfants directs dudit noeud intermédiaire ou dudit noeud racine.

4. Procédé selon l'une quelconque des revendications précédentes, dans lequel lesdites informations de bande passante admissible sont distribuées sur tous les noeuds feuilles dudit noeud intermédiaire ou dudit noeud racine.

5. Procédé selon la revendication 3 ou 4, comprenant en outre le transfert d'informations de rétroaction à partir d'au moins un noeud enfant dudit noeud intermédiaire ou dudit noeud racine, et la prise en compte de ces informations dans ladite attribution de bande passante admissible.

6. Procédés selon les revendications 3 à 5, dans lequel ladite attribution de ladite bande passante admissible pour chaque noeud enfant direct est basée sur le nombre de liaisons descendantes vers des noeuds enfants directs attachés audit noeud intermédiaire ou audit noeud racine.

7. Procédé selon l'une quelconque des revendications précédentes, dans lequel ladite mesure de la bande passante disponible comprend la mesure de la bande passante disponible en aval dudit noeud intermédiaire ou dudit noeud racine.

8. Procédé selon l'une quelconque des revendications précédentes, dans lequel ladite mesure de la bande passante disponible comprend la mesure de la bande passante disponible en amont dudit noeud intermédiaire ou dudit noeud racine.

9. Procédé selon l'une quelconque des revendications précédentes, comprenant en outre les étapes suivantes :
- recevoir des informations de bande passante admissible à partir d'au moins un noeud parent dudit noeud intermédiaire ou dudit noeud racine ;
- baser l'attribution des informations de bande passante admissible pour chacun des noeuds enfants directs dudit noeud intermédiaire ou dudit noeud racine sur lesdites informations de bande passante admissible provenant d'au moins un noeud parent.

10. Procédé selon l'une quelconque des revendications précédentes, dans lequel ledit procédé comprend en outre la répétition des étapes de procédé selon la revendication 1 étape par étape à partir dudit noeud racine jusqu'auxdits noeuds feuilles, afin de fournir auxdits noeuds feuilles une vue globale de la bande passante disponible entre ledit noeud feuille et ledit noeud racine en sens amont et aval.
